# EUROPÄISCHE PATENTANMELDUNG

(11) **EP 1 623 906 A2**
(43) Veröffentlichungstag der Anmeldung: **08.02.2006**
(21) Anmeldenummer: 05014151.4
(22) Anmeldetag: 30.06.2005
(51) Int. Cl.: B62D 1/06, B62D 1/04

(54) **Lenkrad mit Dekorelement**

(30) Priorität: 05.08.2004 DE 202004012304 U
(71) Anmelder: TRW Automotive Safety Systems GmbH, 63743 Aschaffenburg (DE)
(72) Erfinder: Kreuzer, Martin, 63839 Kleinwallstadt (DE)
(74) Vertreter: Strass, Jürgen

(57) **Zusammenfassung**

Ein Lenkrad (10) umfaßt einen Lenkradkranz (14), eine Nabe und wenigstens eine den Lenkradkranz (14) und die Nabe verbindende Speiche (16). Der Lenkradkranz (14) und/oder die Speiche (16) weisen ein Skelett (20) und eine das Skelett (20) umgebende Umschäumung (22) oder Umspritzung sowie wenigstens ein Dekorelement (18) mit wenigstens einem Rastelement (44) auf. Mittels dem Rastelement (44) ist das Dekorelement (18) befestigt, indem das Rastelement (44) in ein eingeschäumtes Halteteil (30) einrastet, das am Skelett (20) befestigt ist.

## Beschreibung

Die Erfindung betrifft ein Lenkrad mit einem Lenkradkranz, einer Nabe und wenigstens einer den Lenkradkranz und die Nabe verbindenden Speiche, wobei der Lenkradkranz und/oder die Speiche ein Skelett und eine das Skelett umgebende Umschäumung oder Umspritzung sowie wenigstens ein Dekorelement mit wenigstens einem Rastelement aufweisen bzw. aufweist, mittels dem das Dekorelement befestigt ist.

Um Lenkrädern ein hochwertiges Aussehen zu verleihen, ist es bekannt, am Lenkradkranz Dekorelemente anzubringen. Oft werden solche Dekorelemente mit einer Lederummantelung des Lenkradkranzes kombiniert. Aus der DE 200 13 706 U1 ist ein Lenkrad der eingangs genannten Art bekannt, bei dem die Dekorelemente über Rastelemente mit einer separat gefertigten, die Umschäumung umgebenden Schale verbunden sind.

Aufgabe der Erfindung ist es, ein kostengünstig zu fertigendes Lenkrad mit einfach aufzubringenden Dekorelementen zu schaffen, bei dem der Nachbearbeitungsaufwand möglichst gering ausfällt.

Bei einem Lenkrad der eingangs genannten Art wird dies erfindungsgemäß dadurch erreicht, daß das Rastelement des Dekorelements in ein eingeschäumtes Halteteil einrastet, das am Skelett befestigt ist. Das Halteteil wird vor der Umschäumung des Skeletts an diesem befestigt und wird dadurch fester Bestandteil des Lenkradkranzes oder der Lenkradspeiche. Das Dekorelement kann dann ohne großen Aufwand in das Halteteil eingeklipst werden. Eine Verbindung des Dekorelements mit dem Skelett oder einer die Umschäumung umgebenden Schale ist nicht vorgesehen.

Vorteilhafte und zweckmäßige Ausgestaltungen des erfindungsgemäßen Lenkrads sind in den Unteransprüchen angegeben.

Weitere Merkmale und Vorteile der Erfindung ergeben sich aus der nachfolgenden Beschreibung eines Ausführungsbeispiels und aus den beigefügten Zeichnungen, auf die Bezug genommen wird. In den Zeichnungen zeigen:
- Figur 1 ein erfindungsgemäßes Lenkrad; und
- Figur 2 einen Schnitt entlang der Linie I-I in Figur 1.

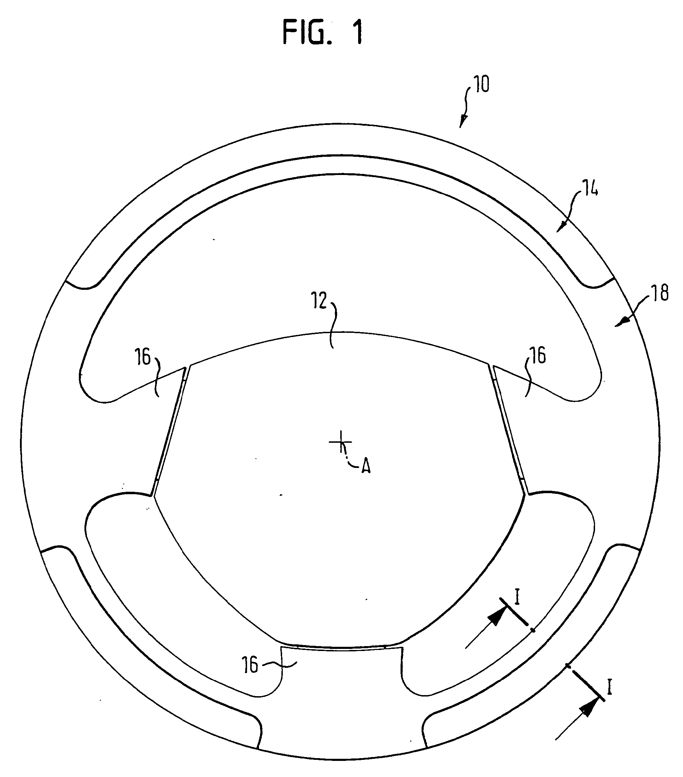

In Figur 1 ist ein erfindungsgemäßes Lenkrad 10 mit einer Mittelachse A dargestellt. Das Lenkrad 10 umfaßt eine Nabe, die durch eine Abdeckung 12 mit einem darunterliegenden Gassackmodul verdeckt ist, einen Lenkradkranz 14 und Speichen 16, die den Lenkradkranz 14 mit der Nabe verbinden. Auf dem Lenkradkranz 14 ist ein Dekorelement 18 angeordnet. Gemäß anderen Ausführungsbeispielen können auch mehrere und/oder anders (z. B. auch auf den Speichen 16) angeordnete Dekorelemente 18 vorgesehen sein.

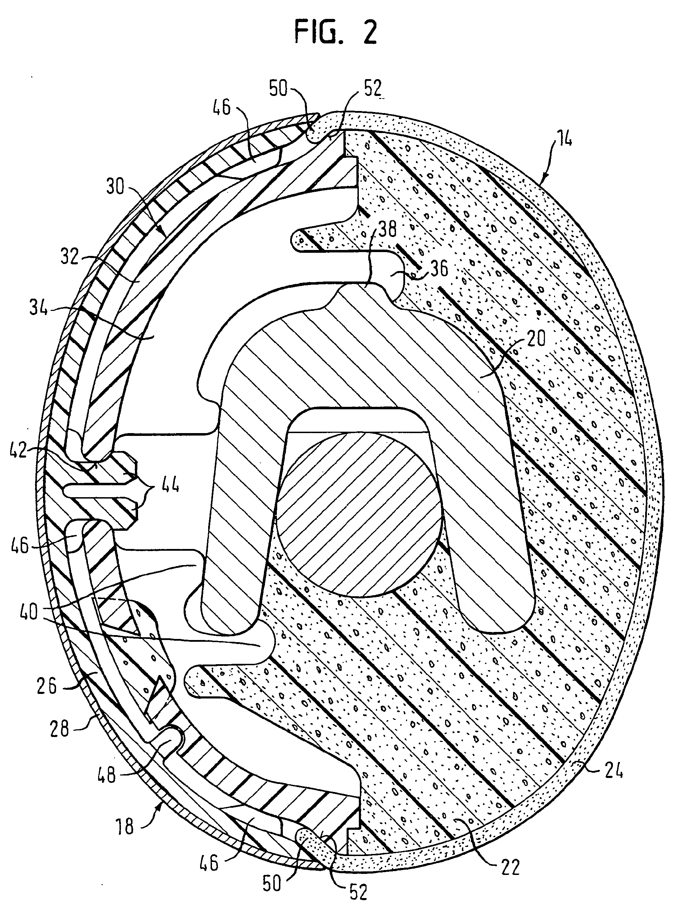

Figur 2 zeigt einen Schnitt durch den Lenkradkranz 14 entlang der Linie I-I und verdeutlicht den Aufbau des Lenkrads 10. Der Lenkradkranz 14 und die Speichen 16 enthalten in ihrem Inneren ein Skelett 20, das dem Lenkrad 10 die grundlegende Stabilität verleiht. Dieses Skelett 20 ist von einer Umschäumung 22 umgeben, die z.B. aus PUR bestehen und auf das Skelett 20 in einem bekannten Schäumverfahren aufgebracht werden kann. Die mit dem Bezugszeichen 22 bezeichnete Schicht kann aber auch aus einem in Spritzgußtechnik aufgebrachten Thermoplast oder aus einem expandierbaren PE oder PP bestehen. Als äußerste Schicht weist der Lenkradkranz 14 eine Lederummantelung 24 auf, die durch das Dekorelement 18 ergänzt wird. Das Dekorelement 18 besteht aus einem Trägerteil 26 aus Kunststoff und einem außenseitig darauf aufgebrachten Furnierholz 28.

In die Umschäumung 22 ist ein Halteteil 30 aus Kunststoff eingefügt, das aus einem äußeren Abschnitt 32 und einem inneren Abschnitt 34 gebildet ist. Ein Haken 36 des Halteteils 30 umgreift einen am Skelett 20 gebildeten Vorsprung 38. Über Positionierabschnitte 40 ist das Halteteil 30 gegenüber dem Skelett 20 exakt positioniert. Das Halteteil 30 weist eine Öffnung 42 auf, durch die ein Rastelement 44 des Dekorelements 18 ragt. Das Rastelement 44, das vorzugsweise einstückig mit dem Dekorelement 18 ausgebildet ist, weist zwei nachgiebige Rasthaken auf, die den äußeren Abschnitt 32 des Halteteils 30 hintergreifen. Je nach Ausdehnung des Dekorelements 18 ist eine geeignete Anzahl solcher Rastverbindungen vorgesehen.

Zwischen dem äußeren Abschnitt 32 des Halteteils 30 und der Innenseite des Dekorelements 18 sind mehrere Distanzhalter 46 angeordnet, die den Abstand des Dekorelements 18 vom Halteteil 30 festlegen und so für einen optisch einwandfreien Übergang zwischen der Lederummantelung 24 und dem Dekorelement 18 sorgen. Zusätzlich sind am Dekorelement 18 Positionierstifte 48 vorgesehen, die in entsprechende Ausnehmungen des Halteteils 30 eingreifen, um ein Verdrehen des Dekorelements 18 zu verhindern.

Zur Herstellung des erfindungsgemäßen Lenkrads 10 wird das Skelett 20 in bekannter Weise umschäumt oder umspritzt. Vorher wird das Halteteil 30 mittels der Haken 36 auf das Skelett 20 aufgeklipst und durch die Positionierabschnitte 40 automatisch positionsgenau fixiert. Die Schäumform wird über dem Halteteil 30 abgedichtet. Es können entweder ein bezüglich der Mittelachse A des Lenkrads 10 vollständig umlaufendes Halteteil 30 oder mehrere voneinander beabstandete Halteteile 30 vorgesehen sein. Im letzteren Fall sind die Halteteile 30 an ihren stirnseitigen Enden durch angeformte Rippen (nicht dargestellt) gegen ein seitliches Einströmen von Schaum abgedichtet. Nach dem Schäumvorgang wird die Lederummantelung 24 aufgebracht. Zuletzt wird das Dekorelement 18 mittels der Rastelemente 44 auf das Halteteil 30 geklipst. Die Ränder 50 der Lederummantelung 24 sind zwischen speziellen Auflageflächen 52 des Halteteils 30 und dem Dekorelement 18 eingeklemmt. Eine Nachbearbeitung des Lenkrads 10 ist nicht erforderlich.

## Patentansprüche

1. Lenkrad mit einem Lenkradkranz (14), einer Nabe und wenigstens einer den Lenkradkranz (14) und die Nabe verbindenden Speiche (16), wobei der Lenkradkranz (14) und/oder die Speiche (16) ein Skelett (20) und eine das Skelett (20) umgebende Umschäumung (22) oder Umspritzung sowie wenigstens ein Dekorelement (18) mit wenigstens einem Rastelement (44) aufweisen bzw. aufweist, mittels dem das Dekorelement (18) befestigt ist, **dadurch gekennzeichnet, daß** das Rastelement (44) des Dekorelements (18) in ein eingeschäumtes Halteteil (30) einrastet, das am Skelett (20) befestigt ist.

2. Lenkrad nach Anspruch 1, **dadurch gekennzeichnet, daß** das Halteteil (30) wenigstens einen Haken (36) aufweist, der an einem Vorsprung (38) des Skeletts (20) angreift.

3. Lenkrad nach Anspruch 1 oder 2, **dadurch gekennzeichnet, daß** das Halteteil (30) Positionierabschnitte (40) aufweist, die die relative Lage des Halteteils (30) zum Skelett (20) festlegen.

4. Lenkrad nach einem der vorhergehenden Ansprüche, **dadurch gekennzeichnet, daß** ein bezüglich der Mittelachse A des Lenkrads (10) vollständig umlaufendes Halteteil (30) vorgesehen ist.

5. Lenkrad nach einem der Ansprüche 1 bis 3, **dadurch gekennzeichnet, daß** mehrere voneinander beabstandete Halteteile (30) vorgesehen sind.

6. Lenkrad nach Anspruch 5, **dadurch gekennzeichnet, daß** an den Stirnseiten der Halteteile (30) Rippen zum Abdichten angeformt sind.

7. Lenkrad nach einem der vorhergehenden Ansprüche, **dadurch gekennzeichnet, daß** zwischen dem Dekorelement (18) und dem Halteteil (30) Distanzhalter (46) angeordnet sind.

8. Lenkrad nach einem der vorhergehenden Ansprüche, **dadurch gekennzeichnet, daß** das Dekorelement (18) wenigstens ein Positionierelement (48) aufweist, das in eine entsprechende Aufnahme des Halteteils (30) eingreift.

9. Lenkrad nach einem der vorhergehenden Ansprüche, **dadurch gekennzeichnet, daß** das Halteteil (30) zweiteilig ausgebildet ist.
